Europäisches Patentamt

European Patent Office

Office européen des brevets

(11) Veröffentlichungsnummer: **0 1 1 7 409**
A1

(12) **EUROPÄISCHE PATENTANMELDUNG**

(21) Anmeldenummer: **84100473.2**

(22) Anmeldetag: **18.01.84**

(51) Int. Cl.³: **B 25 J 19/00**, B 25 J 15/00

(30) Priorität: **26.02.83 DE 3306840**

(43) Veröffentlichungstag der Anmeldung: **05.09.84**
Patentblatt **84/36**

(84) Benannte Vertragsstaaten: **AT BE CH DE FR GB IT LI NL SE**

(71) Anmelder: **GdA Gesellschaft für digitale Automation mbH, Lützelsteiner Strasse 1, D-8000 München 45 (DE)**

(72) Erfinder: **Peyr, Franz, Dom-Pedro-Strasse 6, D-8000 München 19 (DE)**

(74) Vertreter: **Goddar, Heinz J., Dr. et al, FORRESTER & BOEHMERT Widenmayerstrasse 4/I, D-8000 München 22 (DE)**

(54) Messanordnung zum Justieren des Werkzeugflansches eines Industrieroboters.

(57) Meßanordnung zum Justieren des Werkzeugflansches eines Industrieroboters mit einer an dem Werkzeugflansch (2) befestigten und mit diesem geführten, in drei Richtungen Lichtstrahlen aussendenden Lichtquelle (3) und einer aus drei, in den Strahlengängen jeweils im rechten Winkel zu diesen aufgestellten, ortsfest zueinander angeordneten Scheiben (8, 9, 10) bestehenden Projektionsanordnung.

0117409

GdA Gesellschaft für digitale Automation mbH,
Lützelsteiner Str. 1, 8000 München 45

------------------------------------------------

Meßanordnung zum Justieren des Werkzeugflansches eines
Industrieroboters

------------------------------------------------

Die Erfindung betrifft eine Meßanordnung zum Justieren
des Werkzeugflansches eines Industrieroboters.

Hauptsächlich an Arbeitsplätzen, die durch Monotonie,
Lärm, Schmutz, Erschütterung, Hitze usw. gekennzeichnet sind, finden zunehmend automatisierte Einrichtungen
zur Werkstück und/oder Werkzeughandhabung in automatisierten Fertigungsabläufen Verwendung. Vor allem den
flexiblen Handhabungsgeräten, also in mehreren Bewegungsachsen frei programmierbaren Handhabungsgeräten,
die aufgrund ihrer Anpassungsfähigkeit in einer Fertigung der unterschiedlichsten Aufgaben übernehmen können, kommt eine wachsende Bedeutung zu.

Derartige Industrieroboter bestehen im allgemeinen aus
den Baugruppen Antrieb, Steuerung, Kinematik, Greifer
und evt. Sensoren. Da die einzelnen Bewegungsmittel des
Industrieroboters aus einer Vielzahl von Glieder bestehen, läßt sich nicht ausschließen, daß aufgrund von
Abnutzungen, Verschiebungen oder bei dem Auswechseln
von Einzelteilen aufgrund von Bauteiltoleranzen die
ursprüngliche Justierung nicht mehr exakt eingehalten
wird. Weiter stellt sich das Problem, daß bei Austauschen des gesamten Industrieroboters das neue Gerät,
insbesondere dessen Werkzeugflansch, exakt so justiert
sein muß wie das zu ersetzende, was bisher ein Anpassen
des Steuerprogramms an die neuen Gegebenheiten erforderlich machte und daher relativ aufwendig war.

Der Erfindung liegt die Aufgabe zugrunde, eine Meßanordnung zum Justieren eines Industrieroboters zu schaffen, welche ein einfaches und zuverlässiges Justieren
des Werkzeugflansches ermöglicht.

Erfindungsgemäß wird diese Aufgabe gelöst durch eine an
dem Werkzeugflansch befestigte und mit diesem geführte,
in drei Richtungen Lichtstrahlen aussendende Lichtquelle und eine aus drei in den Strahlengängen jeweils im
rechten Winkel zu diesen aufgestellte, ortsfest zueinander angeordnete Scheiben bestehende Projektionsanordnung.

Bevorzugt ist vorgesehen, daß die Lichtstrahlen zueinander rechtwinklig verlaufen, da dies eine besonders
einfache Korrektur aufgrund der erhaltenen Meßwerte
ermöglicht; wo dies jedoch - etwa wegen der räumlichen
Gegebenheiten nicht möglich ist, können auch andere
Richtungsverhältnisse verwendet werden.

Bei einer bevorzugten Ausführungsform ist vorgesehen,
daß die Lichtquelle als Laserkanone ausgebildet ist, da
die Genauigkeit bei der Verwendung von Laserstrahlen
besonders hoch ist.

Die drei bevorzugt zueinander rechtwinklig ausgerichteten Lichtstrahlen können in beliebiger Weise gebildet
werden, vorzugsweise ist vorgesehen, daß bei Verwendung
lediglich einer Lichtquelle ein Lichtstrahl mittels
eines Prismensystems in die gewünschten drei Richtungen
aufgeteilt wird.

Die Projektionsschirme können mit Polarkoordinaten versehen sein, bevorzugt werden jedoch kartesische Koordinaten auf den Projektionsschirmen abgebildet, da diese
ein direktes Ablesen der Fehlerbeträge in kartesischen
Koordinaten ermöglichen.

Die drei Projektionsschirme können an den Wänden des
Raumes, in dem der Industrieroboter steht, angebracht
sein, sie können auch auf einem Stativ befestigt sein,
dessen Standpunkt unveränderlich in dem Raum angegeben
ist. Bevorzugt ist jedoch eine Ausgestaltung, bei der
die drei Projektionsschirme mittels eines Gestänges
miteinander verbunden und zum Anflanschen an bestimmten, dafür eingerichteten Punkten des Industrieroboters

- 4 -

versehen sind.

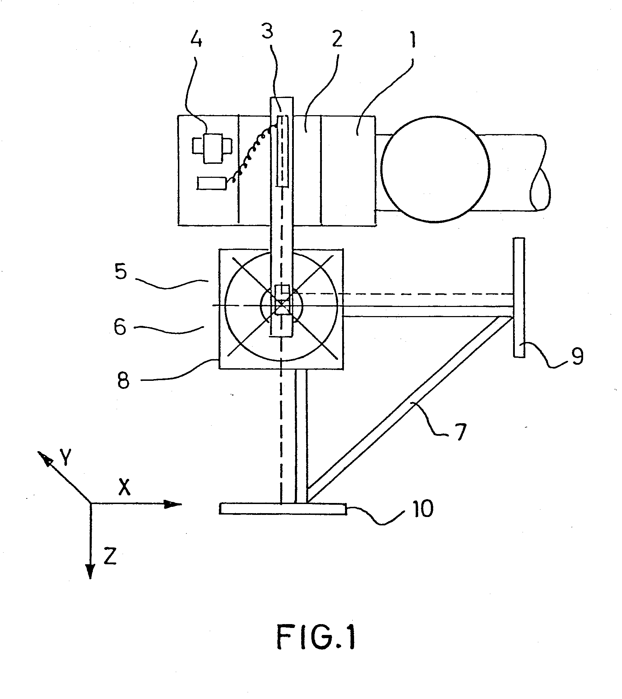

Weitere Merkmale und Vorteile der Erfindung ergeben sich aus den Ansprüchen, der Beschreibung und aus der Zeichnung, die ein Ausführungsbeispiel der erfindungsgemäßen Meßanordnung zeigt.

An der Handachse 1 des Industrieroboters ist an dem Werkzeugflansch 2 die Lichtquelle 3 - hier als Laserkanone ausgebildet, die von einem Netzteil 4 versorgt wird - anmontiert.

Der erzeugte Laserstrahl wird mittels eines Prismensystems 5 in drei zueinander jeweils einen rechten Winkel bildende Lichtstrahlen aufgeteilt. Diese Lichtstrahlen fallen auf Projektionsschirme 8, 9, 10, wo sie einen visuell erkennbaren Lichtfleck erzeugen.

Zum Justieren des Industrieroboters wird die Handachse derart bewegt, daß der Schnittpunkt der drei Lichtstrahlen sich an einem Null-Sollwert-Ort befindet. An diesem Ort sollen die drei Laserstrahlen jeweils so auf den ihnen zugeordneten Projektionsschirm fallen, daß der Lichtstrahl in dem Zentrum des Koordinatensystems erscheint. Wird auf einem oder auf mehreren Projektionsschirmen eine Abweichung von dem Nullpunkt festgestellt, so läßt sich anhand der Koordinaten unmittelbar ablesen, in welche Richtung der Industrieroboter zu justieren ist, was wahlweise dadurch geschehen kann, daß der Industrieroboter von Hand so lange verfahren wird, bis sich alle Lichtpunkte im Nullpunkt des jeweiligen Projektionsschirms befinden, oder aber indem, bei Verwendung eines Auswerterechners, die abgelesenen Koordinatenwerte in bestimmter Reihenfolge in den Rechner eingegeben werden, woraufhin über ein geeignetes Korrekturprogramm der ursprüngliche Nullpunkt der Maschine
automatisch angefahren wird.

Die in der vorstehenden Beschreibung, den Ansprüchen
und der Zeichnung offenbarten Merkmale der Erfindung
können sowohl einzeln als auch in beliebiger Kombination für die Ausführung der Erfindung in ihren verschiedenen Ausgestaltungen wesentlich sein.

0117409

Bezugszeichenliste

==================

| 1  | Handachse        | 1  |
|----|------------------|----|
| 2  | Werkzeugflansch  | 2  |
| 3  | Lichtquelle      | 3  |
| 4  | Netzteil         | 4  |
| 5  | Prismensystem    | 5  |
| 7  | Gestänge         | 7  |
| 8  | Projektionsschirm| 8  |
| 9  | Projektionsschirm| 9  |
| 10 | Projektionsschirm| 10 |

A n s p r ü c h e
==================

1. Meßanordnung zum Justieren des Werkzeugflansches
eines Industrieroboters, gekennzeichnet durch eine an
dem Werkzeugflansch (2) befestigte und mit diesem geführte, in drei Richtungen Lichtstrahlen aussendende
Lichtquelle (3) und eine aus drei in den Strahlengängen
jeweils im rechten Winkel zu diesen aufgestellte, ortsfest zueinander angeordnete Scheiben (8, 9, 10) bestehende Projektionsanordnung.

2. Meßanordnung nach Anspruch 1, dadurch gekennzeichnet, daß die Strahlengänge zueinander rechtwinklig
verlaufen.

3. Meßanordnung nach Anspruch 1 oder 2, dadurch gekennzeichnet, daß die Lichtquelle (3) als Laserkanone ausgebildet ist.

4. Meßanordnung nach einem oder mehreren der vorangehenden Ansprüche, dadurch gekennzeichnet, daß die

0117409

Lichtstrahlen mittels eines Prismensystems (5) in die gewünschten Richtungen aufgeteilt werden.

5. Meßanordnung nach einem oder mehreren der vorangehenden Ansprüche, dadurch gekennzeichnet, daß die Projektionsschirme (8, 9, 10) mit kartesischen Koordinaten versehen sind.

6. Meßanordnung nach einem oder mehreren der vorangehenden Ansprüche, dadurch gekennzeichnet, daß die drei Projektionsschirme (8, 9, 10) mittels eines Gestänges miteinander verbunden und zum Anflanschen an bestimmten, dafür eingerichteten Punkten des Industrieroboters versehen sind.

FIG.1

## EINSCHLÄGIGE DOKUMENTE

EP 84100473.2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | <u>US - A - 3 888 362</u> (FLETCHER)<br>* Fig. 1-3; Zusammenfassung *<br><br>-- | 1 | B 25 J 19/00<br>B 25 J 15/00 |
| A | <u>DE - A1 - 2 430 058</u> (KYBORG)<br>* Gesamt *<br><br>-- | 1 | |
| A | <u>GB - A1 - 2 098 728</u> (WESTERN ELEC-<br>TRIC)<br>* Fig. 1,2; Zusammenfassung *<br><br>-- | 1 | |
| A | <u>DE - B2 - 2 119 486</u> (THOMSON-CSF)<br>* Fig. 3; Patentansprüche 1,4,<br>8 *<br><br>---- | 1-3 | |

**RECHERCHIERTE SACHGEBIETE (Int. Cl. ³)**

B 25 J 9/00

B 25 J 15/00

B 25 J 19/00

G 05 B 19/00

G 05 D 3/00

B 65 G 47/00

Der vorliegende Recherchenbericht wurde für alle Patentansprüche erstellt.

| Recherchenort | Abschlußdatum der Recherche | Prüfer |
|---|---|---|
| WIEN | 04-05-1984 | DRÖSCHER |